# EUROPEAN PATENT APPLICATION

(11) **EP 4 744 552 A1**
(43) Date of publication of application: **20.05.2026**
(21) Application number: 24213006.0
(22) Date of filing: 14.11.2024
(51) Int. Cl.: A47G 19/02, A47G 19/22, B65D 21/02, A47G 19/23, G06Q 10/087

(54) **FOODWARE ITEM WITH A UNIQUE IDENTIFIER, FOODWARE ITEM SCANNING SYSTEM AND METHOD FOR INVENTORYING FOODWARE ITEMS EQUIPPED WITH A UNIQUE IDENTIFIER**

(71) Applicant: Borro BV, 2600 Berchem (BE)
(72) Inventor: VERHAEGE, Glenn, 2600 Berchem (BE); ALBERS, Kasper, 1030 Schaarbeek (BE)
(74) Representative: De Clercq & Partners

(57) **Abstract**

The present invention provides for a reusable foodware item (1, 100) comprising a substantially hollow body (10), the substantially hollow body (10) having an open upper rim (12), a closed base (14) for supporting the foodware item (1) on a surface, and at least one sidewall (16) extending between the base (14) and the upper rim (12) defining an open-ended inner cavity (18) for the receiving of the substance. The at least one sidewall (16) is configured to enable a plurality of similarly shaped foodware items (1, 1'; 100, 100') to be nested within one another such that the base (14) and a portion of the at least one sidewall (16) of a first foodware item (1, 100) fit into the inner cavity (18') of a second foodware item (1', 100'). An upper portion (20, 120) of the at least one sidewall (16) adjacent to and below the open upper rim (12) remains unobstructed by any adjacent stacked foodware item (1', 100'). At least one sidewall (16) is provided with at least one optically imperceptible identifier marking (50, 110, 115) associated with a unique identifier, the at least one optically imperceptible identifier marking (50, 110, 115) being integrated onto or into the exterior surface of the at least one sidewall (16) of the foodware item (1) at the unobstructed upper portion (20, 120) of the at least one sidewall (16).

## Description

### FIELD OF THE INVENTION

The present invention relates to the field of foodware, more precisely to the field of linking a reusable foodware item to a user. In particular, the invention concerns a reusable foodware item having at least one optically imperceptible identifier marking printed onto or embedded in the foodware item, such that the optically imperceptible identifier marking which is associated with a unique identifier can be used to link the foodware item to a particular user during use of the foodware item. The invention further concerns a foodware item scanning system for scanning the reusable foodware item such that the foodware item can be linked to the user in an inventory system. The invention also concerns a method for inventorying foodware items equipped with a unique identifier, such that a foodware item can be linked to a user in an inventory database.

### BACKGROUND OF THE INVENTION

Traditional single-use beverage cups, plates, bowls, and the like, which are widely used for convenience, pose significant environmental challenges due to their limited recyclability and frequent disposal after only one use. Common materials in single-use foodware items, such as plastic or plastic-lined paper, are not biodegradable and often end up in landfills, contributing to persistent waste accumulation. Such materials typically require hundreds of years to decompose, further exacerbating environmental pollution. In addition to waste issues, the production of single-use cups involves high raw material consumption, which increases resource depletion and energy usage.

Economic considerations also favour the use of reusable foodware items. Frequent use of disposable cups incurs ongoing costs for consumers and businesses alike. Reusable foodware items present an opportunity for individual savings, as they eliminate the need for repeated purchases. By minimizing waste generation, reusable cups also help reduce waste management expenses for businesses, particularly in high-traffic environments such as cafes and event venues. Furthermore, such reusable foodware items tend to be more durable and are therefore extremely suitable to add logo's, advertisement, QR codes etc such that the reusable foodware items are not only used for their primary purpose of serving food or beverages, but also to be used as merchandise.

As a result, reusable foodware items have become increasingly attractive by consumers and businesses. However, the collecting of such reusable items has proven to be difficult, often inefficient, inconvenient, and expensive for both the businesses and customers. When such a reusable item needs to be handed in, often a manual refunding is needed, which is labour intensive, creates long waiting lines and often with a high transaction fee as the result. When automated systems are used for scanning e.g. QR codes or RFID tags attached to the reusable foodware item, the scanning of a QR code or detecting of the RFID tag for tracking or inventory purposes can only occur if the QR code or RFID tag is unobstructed for a scanner to correctly and reliably read such a QR code or RFID tag. If a customer wants to have a refund when returning the reusable foodware item, he will thus need to drop them off one by one resulting again in a long waiting line at the automatic drop-off point.

Although the aim of both customer and the business is to collect these reusable items, the above indicated downsides have resulted in a low return of reusable items, creating the same kind of waste volume, and resulted in no change of behaviour of the customer.

QR codes printed on the outer surfaces of items like drinking cups have become increasingly popular among businesses to direct consumers to their websites, where they can access additional information, such as information on the business or venue, recycling instructions or rewards programs. In these cases, the QR code must be highly visible and designed to attract sufficient attention to encourage customers to scan it. However, when QR codes are used for tracking or inventory purposes, their visibility can unintentionally attract user attention, increasing the risk of intentional damage.

The same concern applies to visible RFID tags. Furthermore, an RFID tag has a higher per-unit cost due to the electronic chip and antenna and an RFID tag will require specific and expensive RFID readers. Also, since a RFID tag needs to be embedded in the foodware item, such embedded design complicates the flexibility when such an RFID tag needs to be replaced. And finally, the electronic components of the RFID tag complicate recycling.

As a result, some providers of reusable foodware items are reluctant to place prominent QR codes or RFID tags on these items, especially when they are intended for use at multiple venues or multiple times at the same venue.

In view of these environmental and economic factors, there is a clear demand for an innovative solution to facilitate the efficient collection and reuse of durable foodware items. It is therefore desirable to further improve existing reusable foodware items to enable a quick and convenient returning manner, and to additionally allow each foodware item to be linked to a user such that the user can receive his deposit back after returning the foodware item.

### SUMMARY OF THE INVENTION

It is an object of the embodiments of the present invention to provide a reusable foodware item with a failsafe unique identifier while reducing the risk of intentional or unintentional damage of the unique identifier.

Accordingly, the invention relates to a reusable foodware item comprising a substantially hollow body, the substantially hollow body having an open upper rim, a closed base for supporting the foodware item on a surface, and at least one sidewall extending between the base and the upper rim defining an open-ended inner cavity for receiving of the substance. The at least one sidewall is configured to enable nesting of a plurality of similarly shaped reusable foodware items such that the closed base and a portion of the at least one sidewall fit into the inner cavity of another reusable foodware item while leaving an upper portion of the sidewall, adjacent to and below the open upper rim, unobstructed, thereby defining an unobstructed upper portion. The at least one sidewall is provided with at least one optically imperceptible identifier marking associated with a unique identifier, the at least one optically imperceptible identifier marking being integrated onto or into the exterior surface of the at least one sidewall of the foodware item at the unobstructed upper portion of the at least one sidewall.

When reusable foodware items are arranged so that each item fits snugly inside the next, with at least one optically imperceptible identifier marking on an unobstructed surface, multiple items can be returned together conveniently. This optically imperceptible identifier, associated with a unique identifier, always remains visible due to its strategic placement on the item. The imperceptibility of the marking helps prevent intentional damage or tampering by users. This feature offers an advantage over existing solutions that require items to be returned one by one.

More particularly, the invention relates to a foodware item wherein a plurality of optically imperceptible identifier markings is discretely arranged next to each other along the unobstructed upper portion of the at least one sidewall of the foodware item, each one of the plurality of optically imperceptible identifier markings being associated with the same unique identifier.

Advantageously, such a plurality of discretely arranged, optically imperceptible identifier markings enhance scanning reliability, ensures resilience against damage, provides anti-tampering protection, and facilitates efficient identification across various use applications. In fact, multiple identifier markings increase the chances that at least one marking will be fully readable, regardless of the item's orientation or any partial obstruction which may randomly occur when returning the item. This improves scanning reliability, allowing quick and reliable identification during returns or inventory processes regardless of the item's orientation. Further, if one or more of the markings becomes damaged or worn over time, the remaining markings may still enable identification, making the item less susceptible to the ability to be reused due to wear or accidental damage.

Yet another advantage is that the discrete and optically imperceptible nature of the markings helps prevent users from tampering with all identifier markings, as they are less likely to notice or target multiple or all markings. This setup thus allows for efficient scanning in various environments - whether in automated systems, at return stations, or during manual handling - by ensuring that at least one identifier marking is consistently scannable, supporting a smooth and fast return or tracking process.

In particular embodiments, the uncovered portion of the sidewall of the foodware item is between 0,2 mm and 100 mm, more preferably between 0,2 mm and 30 mm, even more preferably between 0,3 mm and 10 mm.

Having a portion of the sidewall at least partially unobstructed offers the advantage of a more compact, stable nesting configuration, which minimizes storage space and reduces the risk of tipping. Additionally, the limited size of the unobstructed portion will result in an even more discreet integration of the optically imperceptible identifier marking, further reducing the risk of intentional damaging of the identifier marking. Especially when the reusable foodware item is a drinking cup having an open upper rim, the optically imperceptible identifier markings positioned underneath the upper rim remains obscured by the rim, such that the identifier marking is still detectable, but is placed in a way that makes it difficult for the consumer to detect or notice the identifier markings.

In particular embodiments, the at least one optically imperceptible identifier marking comprises a 1D code (e.g. Code 39, Code 128, Korean 3, Base 32), a 2D code (e.g. PDF417, Micro PDF417, Aztec, QR code, Han Xin, datamatrix), a watermark, or via digital watermark technology. Preferably, the at least one optically imperceptible identifier marking is applied using an ultraviolet ink, an infrared-reflecting ink, a thermochromic ink, a photochromic ink, laser etching, and/or microprinting. Applying markings with ink which will only become visible when applying a converting process, such as exposing the marking to a UV-light, IR-light, or apply a temperature change to the marking to expose the marking such that it can be detected and read by a scanning device.

When markings are provided using laser etching of microprinting, scanning the marking by using a scanning device with a magnifier or high DPI will enable detection and reading or read-out of the marking. The advantage of infra-red reflective inks is that such inks will only become visible under infra-red light, providing for additional security and discretion. Especially when a foodware item, such as a drinking cup, is already printed or wrapped with a logo or design, providing an optically imperceptible identifier marking over such a logo or design will not hinder, obstruct or otherwise interfere with the initial design. This has the advantage that the original design or logo remains unaffected and visible when a customer is using the drinking cup, yet when the identifier marking needs to be scanned, it can be made visible, regardless of the logo or design present underneath the provided identifier marking.

The advantage of thermochromic inks is that the change of colour becomes visible when exposed to heat, offering a unique authentication means. The advantage of using photochromic inks is similar to the use of UV-reactive inks, in that they become visible only when exposed to UV light. Tiny text or patterns applied by microprinting will only become visible under magnification, thus making them impossible to scan or read without such magnification tool. The advantage of using watermarks is that they are digitally or physically incorporated into the cup design without being noticed. Hence, each of the technologies offer unique benefits and depending on the needs and preferences of the customer, a different technology may be preferred over another technology. The most commonly known foodware item is a drinking cup. However, other foodware items can be envisaged, such as a food bowl for salads or soups, durable plates for main courses, burger boxes and other food containers. Depending on the type of foodware item, one technology to apply the optically imperceptible identifier markings may be more suitable than another technology listed above.

Preferably, the at least one optically imperceptible identifier marking is printed onto the outer surface of the sidewall of the foodware item at or along the unobstructed upper portion. By providing the marking on the outside of the foodware item, such a marking is more easily detectable.

Also, using a non-electronic optically imperceptible identifier marking which is printed on the outer surface of the sidewall of a foodware item is cheaper, requires no expensive electronic components thus making them immune to, or otherwise unaffected by, both electronic and magnetic interference, and allows for an easy customization with new identifier data without altering the provided identifier markings. Furthermore, when the optically imperceptible identifier marking is rendered visible, such an identifier marking can be scanned by standard smartphone cameras or known scanning devices, thus not necessarily requiring specialized equipment.

In particular embodiments, the at least one optically imperceptible identifier marking is embedded into the sidewall of the foodware item. Such an embedded identifier marking has the advantage that a user cannot easily damage the identifier marking, either it being intentionally or unintentionally. Such an embedded optically imperceptible identifier marking can be a QR code which is printed onto see-through plastic strip using ultraviolet ink. When manufacturing the foodware item, the strip foreseen with the QR code can be embedded into the sidewall of the foodware item such that it is effectively sealed off by an outer layer of the sidewall.

In particular embodiments, the foodware item further comprising a visible identifier marking and/or a RFID tag provided on or within the foodware item and associated with the same unique identifier. Additional identification means may be present on top of the at least one optically imperceptible identifier marking such that, depending on the type of scanning device available, one or the other identification means is more easily scannable.

In particular embodiments, the foodware item is a drinking cup, a food bowl for salads or soups, durable plates for main courses, burger boxes or other food containers. Preferably, a number of optically imperceptible identifier markings are printed on the outer circumference of the wall or are embedded in the wall of the drinking cup along its circumference. Preferably, the optically imperceptible identifier markings are positioned in close vicinity to the open upper rim, such that when the drinking cups are nested within one another, the unobstructed upper portion between two nested drinking cups will hold the optically imperceptible identifier markings. Further, placing the optically imperceptible identifier markings close to the upper open rim allows for an easy location of the optically imperceptible identifier markings such that users can scan the optically imperceptible identifier markings without the need to actually see the identifier marking. Also, since the identifier markings are placed under the rim, rather than near the base, it is likely that a designer is not using this space to print other designs for the identifier marking to stay cleaner and more readable, contributing to the reliability of the optically imperceptible identifier markings. When being used, a user may leave e.g. a lipstick marking on the rim and the outer surface of the drinking cup, in the vicinity or on the provided identifier marking. Since multiple optically imperceptible identifier markings are foreseen on the outer circumference of the wall, even if one of the markings is no longer clearly scannable, the surrounding identifier markings will still be able to render visible and scannable by a scanning system.

Further, if the unobstructed space is printed with a design, an optically imperceptible identifier marking can be applied on top of the already available design, without interfering with this design. For the user, the additional identifier marking is not visible, while the underlying design will still be visible.

The invention further relates to a plurality of reusable foodware item comprising at least a first foodware item and a second foodware item, each of the foodware items having at least one optically imperceptible identifier marking, wherein a sidewall of the first foodware item is configured for nesting into the second foodware item, such that the closed base and a portion of the sidewall of the first foodware item fit into the inner cavity of the second foodware item while leaving an upper portion of the sidewall, adjacent to and below the open upper rim, unobstructed by the second foodware item. When a first foodware item is nested into a second foodware item, the identifier markings on both foodware items can be scanned at the same time, without the need to remove the fist foodware item out of the second foodware item. This is extremely beneficial, since a user wishing to return a used foodware item, will not need to individually return the foodware items, but is able to nest them into each other and deposit them in bulk.

The invention further relates to a system for identifying at least one optically imperceptible identifier marking provided on one or more foodware items. The system comprising a scanning device having a rendering device, one or more scanning sensor and a central processing unit (CPU). The rendering device being configured to render the at least one optically imperceptible identifier marking visible, and the one or more scanning sensor being configured to capture data associated with the identifier marking after being made visible by the rendering device. The CPU is operatively coupled to the rendering device and the one or more scanning sensor to control the operation of the rendering device and/or one or more scanning sensor by sending instructions to initiate, adjust and/or terminate the rendering by the rendering device and/or the scanning process by the one or more scanning sensor, and to receive the captured data from the one or more scanning sensor.

Advantageously, the rendering device is able to make at least one optically imperceptible identifier marking visible, such that it is detectable and scannable by one or more scanning sensor. Once detected and scanned, the scanned signal can be sent to the CPU for further processing.

Since the rendering device and one or more scanning sensor are operatively coupled to the CPU, the CPU is able to control the operation of the rendering device and/or one or more scanning sensor such that the rendering device and the one or more scanning sensor will only be operated when necessary.

In a preferred embodiment, the scanning device further comprises an inlet configured for the introduction of the foodware item into the scanning device for scanning, and an outlet configured for removal of the foodware item from the scanning device after scanning. The rendering device and the at least one scanning device are positioned between the inlet and the outlet of the scanning device. Preferably, the scanning device comprises a casing isolating the interior from the external environment, housing both the rendering device and the one or more scanning sensor securely within the enclosure, while allowing access to the interior of the scanning casing by the inlet and outlet of the scanning device.

In a preferred embodiment, the one or more scanning sensor is configured to scan a plurality of foodware items nested within one another. In particular, the one or more scanning sensor is configured to scan multiple foodware items at the same time, detecting an optically imperceptible identifier marking linked to a unique identifier on each individual foodware item, thus allowing the sensor to detect and read multiple unique identifiers assigned to individual foodware items at the same time.

In a preferred embodiment, the system further comprises a conveying system positioned between an inlet and outlet of the scanning device. The conveying system being configured to transport a foodware item from the inlet to the outlet of the scanning device. Such a conveying system is preferably configured to move a foodware item from the inlet to the outlet due to gravity. Therefore, the inlet of the scanning device is positioned above the outlet to allow the foodware item to slide downwardly. Although such a gravity conveyor relies on gravity instead of a motorized component to move items along its path, a motorized conveying system is likewise possible to move the foodware item actively from the inlet to the outlet.

The conveying or guiding system advantageously enables a user to insert the foodware item into the inlet of the scanning device, where it is then moved either passively (e.g., by gravity) or actively (e.g., mechanically transported) toward the outlet, while allowing the rendering device to render the identifier marking visible, and the scanning sensor to detect and scan the now visible identifier marking.

In a preferred embodiment, the one or more scanning sensor is arranged to scan the at least one rendered visible identifier marking sideways. Preferably, the one or more scanning sensor is able to scan multiple identifier markings associated with the same unique identifier at the same time, and/or to scan multiple identifier markings associated with different unique identifiers at the same time. Preferably, the one or more scanning sensor is able to only partly scan multiple identifier markings associated with the same unique identifier at the same time, and the CPU is configured to compose a single identifier marking associated with a unique identifier from the partly scanned identifier markings.

Especially when the surface of the sidewall is curved, the identifier markings may not be completely visible and hence scannable. Additionally, when in use, a user may leave a stain e.g. of lipstick, the food or beverage which is held in the foodware item on the outer surface and over one of the identifier markings. It is thus beneficial when the scanning sensor is able to scan multiple identifier markings at the same time to allow for at least one of the identifier markings to be scanned by the scanning sensor.

In a preferred embodiment, the system further comprises a detector sensor for detecting the presence of a foodware item, the detector sensor being configured to detect the introduction of a foodware item in the scanning device. When such a detector sensor is present, the CPU will be able to control the operation of the rendering device and the one or more scanning sensor such that the system is operated in an efficient manner.

In a preferred embodiment, the CPU further comprises a data transmitting unit, the data transmitting unit being connected to the CPU for receiving the scanned data and transmitting the received scanned data to an external server for further processing.

In a preferred embodiment, the rendering device is a UV illumination device configured to employ UV light to render the at least one optically imperceptible identifier marking visible for the scanning sensor. Alternatively, the rendering device is an IR illumination device, a heating device, a light source, or magnification device.

The invention further relates to a method for using an inventoried foodware item, the foodware item having at least one optically imperceptible identifier marking. The method comprises the following steps:
- Ordering step: during ordering, the customers' drinking cup is linked to the payment card, such as a bank card, of the user. This is typically achieved through integration with the event organizers or merchants POS system. By either using built-in cameras of the POS system or by using USB-connected camera's each drinking cup 1 is scanned and identified.
- Return step: at designated return points, the returned drinking cups are scanned to identify which ones have been brought back.
- Refund step: upon successful return identification, an adjustment to the original payment is initiated and the refund is processed through a payment processor.

The above steps ensure the accurate tracking of the foodware items, provide for a seamless integration with existing POS systems, and facilitate an efficient refund processing. Additionally, such a workflow prevents fraud by linking the value of a foodware item to a paid deposit during ordering, resulting in a user-friendly, environmentally responsible, and superior customer experience with hassle-free returns and refunds.

The invention further relates to a method for inventorying a plurality of foodware items, each foodware item having at least one optically imperceptible identifier marking provided on the foodware item. The method comprises the steps of:
- providing one or more foodware item, wherein each foodware item is linked to a unique identifier in an inventory database, wherein each foodware item is provided with at least one optically imperceptible identifier marking associated with the same unique identifier,
- identifying a first foodware item by scanning at least one optically imperceptible identifier marking, a visible identifier marking and/or a RFID tag provided on or within the foodware item and associated with the same unique identifier,
- identifying a first user, optionally coupling financial information of the first user to an account of the first user in the inventory database
- linking the first user to the first foodware item in the inventory database,
- registering the status of the first foodware item as removed in the inventory database, and
- optionally processing a first financial action associated with the removal status based on the financial information of the first user in the first user account.

When adding foodware items to an inventory database, these foodware items become part of the inventory. Preferably, the adding of foodware items is done by scanning an optically imperceptible identifier marking associated with a unique identifier. Each foodware item is coupled to one unique identifier, while each foodware item may have multiple optically imperceptible identifier markings provided thereon.

Then, the foodware item is identified by scanning at least one of the optically imperceptible identifier markings which are associated with the unique identifier.

After identifying the foodware item by scanning the identifier marking, a user who will be handed a specific foodware item will need to be identified. Identifying the user is preferably done by reading the EMV chip embedded in the bankcard of the user. Typically, a unique transaction code will be generated after activation by the EMV chip for each use, thus allowing the EMV chip, and hence the user, to be linked to a specific financial transaction. During the identification process of the user, the financial information such as the information available on the EMV chip and the transaction code will be stored in a user account. Preferably, the user account is stored in a database forming part of the inventory database.

Further, the identified user and identified foodware item are linked to each other in the inventory database. The particular foodware item is then registered with the status "removed" in the inventory database, and the particular foodware item can be handed over to the user registered to the foodware item. Preferably, an amount will be charged or reserved on the bankcard of the user as a deposit for the use of the foodware item.

In a preferred embodiment, the method further comprises the steps of:
- identifying the first foodware item by scanning the at least one optically imperceptible identifier marking on the foodware item,
- registering the status of the first foodware item as returned in the inventory database,
- decoupling the first user from the first foodware item in the inventory database if the status of the first foodware item is registered as returned in the inventory database, and
- optionally, processing a second financial action associated with the returned status based on the financial information of the first user in the first user account.

When the user wants to return the foodware item, the foodware item will need to be identified by again scanning the optically imperceptible identifier marking on the foodware item.

Once scanned and after confirming the particular foodware item is indeed part of the inventory database, the status of the foodware item can be changed from "removed" to "returned" in the inventory database. Preferably as soon as the foodware item is returned, after the event or after all users were able to return their individual foodware items, the inventory database is checked, and the deposit reserved when removing the foodware item from the inventory database is released again, or the amount withheld from the bankcard of the user is refunded.

After release or refunding of the deposit, the user is decoupled from the particular foodware item, such that the foodware item can be reused at a different venue and used by a different user.

The coupling of the financial information of the user can preferably be done by reading a chip or magnetic stripe of the bankcard of the user. Alternatively, mobile payment tools and digital wallet services can be used to identify a user and add his financial information to a user account. The user account can then be linked to a specific foodware item in the inventory database.

Once the event is finished, a financial action will be processed. Depending on the status of the foodware items in the inventory database, a different financial action may occur. For those foodware items which were not returned and thus are still listed in the inventory database with status "removed", the initially pre-authorization payment including both the purchase of the food or beverage and the deposit for the reusable foodware item will be deducted from the user's account. Such a financial action can be that the original financial action initiated when the user picked up the foodware item is no longer tentative, but will in fact be executed and the reserved amount of money will in fact be transferred in its entirety from the bank account of the user to the bank account of the merchant of the foodware item. However, for those foodware items which were returned and are listed in the inventory database as status "returned", the initial pre-authorized payment will be adjusted such that the user will only pay for the purchased food or beverage, while the deposit is deducted from the total amount. Hence, the user will only pay for the reusable foodware item when the foodware item is not returned.

The above and further aspects and preferred embodiments of the invention are described in the following sections and in the appended claims. The subject-matter of appended claims is hereby specifically incorporated in this specification.

### DESCRIPTION OF THE DRAWINGS

In order to better demonstrate the features of the invention, some examples of possible and preferred embodiments of the present invention are described in the accompanying figures without any limiting character. In these figures, like numbers indicate like or similar elements. The numerical references are discussed in more detail in the examples.
**Figure 1** illustrates a side view of a foodware item provided with a number of optically imperceptible identifier markings on the foodware item according to the invention.
**Figure 2** illustrates a bottom view of the foodware item as shown in figure 1.
**Figure 3** illustrates a cross-sectional view of the first embodiment taken along line A-A of figure 2.
**Figure 4** illustrates a side view of four foodware items of figure 1 nested within one another.
**Figure 5** illustrates an alternative foodware item according to the invention.
**Figure 6** illustrates a system for scanning a foodware item as shown in figures 1 to 5.
**Figure 7** illustrates a flowchart showing a method for inventorying foodware items according to the invention.

### DETAILED DESCRIPTION OF THE INVENTION

As used herein, the singular forms "a", "an", and "the" include both singular and plural referents unless the context clearly dictates otherwise.

The terms "comprising", "comprises" and "comprised of" as used herein are synonymous with "including", "includes" or "containing", "contains", and are inclusive or open-ended and do not exclude additional, non-recited members, elements, or method steps. The terms also encompass "consisting of' and "consisting essentially of", which enjoy well-established meanings in patent terminology.

The recitation of numerical ranges by endpoints includes all numbers and fractions subsumed within the respective ranges, as well as the recited endpoints. This applies to numerical ranges irrespective of whether they are introduced by the expression "from... to..." or the expression "between... and..." or another expression.

The terms "about" or "approximately" as used herein when referring to a measurable value such as a parameter, an amount, a temporal duration, and the like, are meant to encompass variations of and from the specified value, such as variations of +/-10% or less, preferably +/-5% or less, more preferably +/-1% or less, and still more preferably +/-0.1% or less of and from the specified value, insofar such variations are appropriate to perform in the disclosed invention. It is to be understood that the value to which the modifier "about" or "approximately" refers is itself also specifically, and preferably, disclosed.

Whereas the terms "one or more" or "at least one", such as one or more members or at least one member of a group of members, is clear per se, by means of further exemplification, the term encompasses inter alia a reference to any one of said members, or to any two or more of said members, such as, e.g. any ≥3, ≥4, ≥5, ≥6 or ≥7 etc. of said members, and up to all said members. In another example, "one or more" or "at least one" may refer to 1, 2, 3, 4, 5, 6, 7 or more.

The discussion of the background to the invention herein is included to explain the context of the invention. This is not to be taken as an admission that any of the material referred to was published, known, or part of the common general knowledge in any country as of the priority date of any of the claims.

Throughout this disclosure, various publications, patents, and published patent specifications are referenced by an identifying citation. All documents cited in the present specification are hereby incorporated by reference in their entirety. In particular, the teachings or sections of such documents herein specifically referred to are incorporated by reference.

Unless otherwise defined, all terms used in disclosing the invention, including technical and scientific terms, have the meaning as commonly understood by one of ordinary skill in the art to which this invention belongs. By means of further guidance, term definitions are included to better appreciate the teaching of the invention. When specific terms are defined in connection with a particular aspect of the invention or a particular embodiment of the invention, such connotation or meaning is meant to apply throughout this specification, i.e. also in the context of other aspects or embodiments of the invention, unless otherwise defined. For example, embodiments directed to products are also applicable to corresponding features of methods and uses.

In the following passages, different aspects or embodiments of the invention are defined in more detail. Each aspect or embodiment so defined may be combined with any other aspect(s) or embodiment(s) unless clearly indicated to the contrary. In particular, any feature indicated as being preferred or advantageous may be combined with any other feature or features indicated as being preferred or advantageous.

Reference throughout this specification to "one embodiment", "an embodiment" means that a particular feature, structure, or characteristic described in connection with the embodiment is included in at least one embodiment of the present invention. Thus, appearances of the phrases "in one embodiment" or "in an embodiment" in various places throughout this specification are not necessarily all referring to the same embodiment. Furthermore, the particular features, structures or characteristics may be combined in any suitable manner, as would be apparent to a person skilled in the art from this disclosure, in one or more embodiments. Furthermore, while some embodiments described herein include some, but not other features included in other embodiments, combinations of features of different embodiments are meant to be within the scope of the invention, and form different embodiments, as would be understood by those in the art. For example, in the appended claims, alternative combinations of claimed embodiments are encompassed, as would be understood by those in the art.

Unless indicated otherwise, all methods, steps, techniques, and manipulations that are not specifically described in detail can be performed and have been performed in a manner known per se, as will be clear to the skilled person. Reference is for example again made to standard handbooks as well as to the general background art referred to herein and to the further references cited therein.

The inventors have developed a reusable foodware item having one or more optically imperceptible identifier marking associated with the same unique identifier on its outer surface. The term "optically imperceptible identifier marking" as used herein generally refers to an identifier marking that cannot be seen or detected by the human eye under normal lighting conditions. It is to be understood that such an identifier marking does not have an electronic component. For instance, an RFID tag is provided with electronic components but is not considered to be an identifier marking as claimed in the present invention, even if the RFID tag is embedded in the foodware item in such a manner that the RFID tag is no longer visible.

As illustrated in the figures, which depict certain representative embodiments of the present invention, foodware items are shown having one or more identifier marking which, although they are visible on the figures, cannot be seen or easily detected by the human eye under normal lighting conditions. It is the intention of the inventors to provide for an identification means which is not easily distinguishable or detectable and which can only be revealed under specific conditions such as the use of e.g. UV light for detection. Although the use of QR codes on foodware items such as drinking cups have been known, typically, a single QR code is present and positioned and designed to stand out for the user. In fact, the known branded drinking cups have the intention for the user to scan it and therefore the QR code needs to be extremely visible. Additionally, if a merchant wants to provide a design or logo on the reusable foodware items, a QR code would need to be incorporated into the design and remain visible for it to be scanned. However, the inventors aim for the opposite. In order to guarantee a long lifespan, it is crucial that the identifier marking is not tampered with or removed from the reusable foodware item. If a user is not aware of such an identifier marking, it is unlikely for the user to tamper with it, and the identifier marking is thus only in danger of unintentional removal or partial damaging due to e.g. wear during use. Also using an optically imperceptible identifier marking which can be placed over an existing design, will guarantee an unrestricted design freedom.

The term "unique identifier" as used herein generally refers to a single and unique manner to identify the individual foodware item. Multiple identifier markings can be linked to one specific and unique identifier. Preferably, the multiple identifier markings are the same markings, all linked to the same unique identifier. Hence, a foodware item can have multiple identical identifier markings all associated with the same unique identifier. Alternatively, a foodware item can have multiple different identifier markings, each different identifier marking associated with the same unique identifier.

In addition to such an optically imperceptible identifier marking, one or more additional visible identifier marking can be added to the foodware item. Such a visible identifier marking may attract the user's attention, allow him to scan the identifier marking to e.g. check the balance on his user account, while still advantageously diverting the attention of the user away from the optically imperceptible identifier markings.

The reusable foodware item according to the invention is a foodware item comprising a substantially hollow body, the substantially hollow body having an open upper rim, a closed base for supporting the foodware item on a surface, and at least one sidewall extending between the base and the upper rim defining an open-ended inner cavity for the receiving of the substance. The at least one sidewall is configured to enable a plurality of similarly shaped foodware items to be nested within one another such that the base and a portion of the at least one sidewall of a first foodware item fit into the inner cavity of a second foodware item and an upper portion of the at least one sidewall adjacent to and below the open upper rim remains unobstructed by any adjacent stacked foodware item. For instance, when the foodware item is a drinking cup, similar or like drinking cups can be stacked in each other, leaving a top circumferential area peeking out from the lower positioned drinking cup. When the foodware items, e.g. a drinking cup or a food bowl, are nested into each other, a section or upper portion of each of the nested foodware items will thus remain unobstructed. By positioning one or more optically imperceptible identifier markings onto or into this unobstructed portion of the exterior surface of a sidewall, it is possible for a scanning device to scan at least one identifier marking associated with each nested foodware item. Hence, multiple foodware items can be collected and returned for scanning, without the need to individually offer each foodware item when returning them.

Further, providing such identifier markings close to the upper open rim of the foodware item, being in the area of the foodware item, which is unobstructed when nested, will guide an operator who needs to scan the foodware item to the correct area for scanning.

Typically, a plurality of optically imperceptible identifier markings is discretely arranged next to each other along the unobstructed upper portion of the at least one sidewall of the foodware item. Each one of the plurality of optically imperceptible identifier markings being associated with the same unique identifier. Since multiple identifier markings are placed on the outer surface of the foodware item, with each identifier marking linked to the same unique identifier, the item can be identified by scanning any one of these identifier markings. This is particularly beneficial for rounded surfaces, where not all markings may be easily scannable. Also, if one of the identifier markings is damaged or stained by e.g. a lipstick imprint, the remaining identifier markings will still by scannable. Even if the scanning sensor is only able to complete a partial scan, it may still be possible to use this partial scan, possibly with the help of another partial scanned identifier marking, to generate a complete identifier marking. Thus, having multiple scannable markings on the outer surface increases the likelihood that the scanning sensor can successfully capture at least one of them.

The unobstructed portion of the sidewall of the foodware item is preferably between 0,2 mm and 100 mm, more preferably between 0,2 mm and 30 mm, even more preferably between 0,3 mm and 10 mm. The space required for the identifier marking on the sidewall surface of the foodware item depends on the type of marking and the way it is applied. For instance, if a barcode is used as the identifier marking and printed on the outer surface with infrared-reflective ink, it may occupy a larger area than a microprinted QR code. The area required for each specific identifier marking, based on its application method, affects the amount of unobstructed surface space, which, in turn, impacts how many foodware items can be easily and conveniently stacked or nested. Preferably, a margin is added to the necessary unobstructed surface space, more particularly between the top of the identifier marking and the upper rim of the foodware item. That way, a scanning system will always be able to scan the identifier marking without its view being blocked by the upper rim which may otherwise be positioned in front of the identifier marking.

Preferably, the optically imperceptible identifier markings are applied using an ultraviolet ink, an infrared-reflecting ink, a thermochromic ink, a photochromic ink, laser etching, and/or microprinting. Ultraviolet ink is ink that is transparent or nearly invisible in regular lighting and becomes visible only under UV light. Infrared-reflecting ink is ink that reflects infrared light, making it detectable by devices that can read infrared wavelengths. Reflected infrared light remains invisible to the human eye. Thermochromic ink changes colour based on temperature. Once the temperature changes, the change in colour is reversed. Photochromic ink is ink that changes colour in response to light exposure such as UV light. Laser etching uses a focused laser beam to engrave or mark a surface by removing a thin layer of material, while creating precise and durable identifier markings. Microprinting is the process of printing extremely small text or patterns, only visible under magnification. These inks and methods can be formulated to be non-toxic, particularly for food-safe or consumer-safe applications, thus making them extremely useful when applying the identifier markings onto or into the outer surface of a foodware item.

Although it is more convenient to print an identifier marking directly onto the outer surface of a foodware item, it is also possible to e.g. print such an identifier marking on a carrier, which can then be embedded into the surface of the foodware item. Embedding the identifier marking into the surface of the foodware item has the advantage that such an identifier marking is even less prone to wear or damage.

Various configurations of the foodware item and/or the optically imperceptible identifier marking are contemplated within the scope of the invention, allowing for modifications and adaptations to suit different applications.

In a related aspect, the invention also provides for a system for scanning a foodware item foreseen with one or more optically imperceptible identifier marking. The system comprising a rendering device, one or more scanning sensor and a central processing unit (CPU). The term "scanning device" as used herein generally refers to any kind of device which is able to hold both the rendering device and the one or more scanning sensor. The term "rendering device" as used herein generally refers to any kind of device which is able to make the otherwise optically imperceptible identifier marking visible again, e.g. by applying UV light to the optically imperceptible identifier marking. Likewise, a rendering device can be a magnifier which is placed in front of the scanning sensor to magnify the identifier marking which was applied to the foodware item by microprinting. The term "scanning sensor" as used herein generally refers to any kind of sensor which is able to detect, scan a process the captured data of the scanned identifier marking. The term "central processing unit (CPU)" as used herein generally refers to any kind of processing unit which is operatively coupled to the rendering device and the scanning sensor, and which is able to receive the captured data from the scanning sensor and to process the captured data. Such a CPU is able to control the operation of the rendering device and the scanning sensors by sending instructions to initiate, adjust and/or terminate the rendering by the rendering device and/or the scanning process by the one or more scanning sensor.

In a preferred embodiment, the system comprises a scanning device having an inlet and an outlet. The term "inlet" as used herein generally refers to an opening in the casing of the scanning device through which a foodware item, or a stack of nested foodware items can be introduced for scanning. The term "outlet" as used herein generally refers to an opening in the casing of the scanning device through which the foodware item is able to exit the scanning device once it has been scanned by the scanning sensor.

In a preferred embodiment, the one or more scanning sensor is configured to scan a plurality of foodware items nested within one another. The term "plurality of foodware items" as used herein generally refers to multiple like foodware items which are place on top of each other or inserted and nested into one another to form a stack of foodware items. Alternatively, the one or more scanning sensor is configured to scan a plurality of foodware items which are not fully nested within one another, but who are inserted quickly after one another into the scanning device such that a plurality of foodware items is simultaneously inside the scanning device.

In a further preferred embodiment, the system further comprises a conveying system positioned between the inlet and outlet of the scanning device. The term "conveying system" as used herein generally refers to any system which allows the movement of a foodware item from the inlet to the outlet of the scanning device. The foodware item is able to move passively or actively. With a passive conveying system, a system is referred to which allows the foodware item to move without any further assistance, except by the presence of gravity. With an active conveying system, a system is referred to which requires assistance to move the foodware item from the inlet to the outlet.

In a preferred embodiment, the system further comprises a detector sensor for detecting the presence of a foodware item. The term "detector sensor" as used herein generally refers to any sensor which is able to detect the presence of the foodware item, either by movement, or object identification. The detector sensor may be positioned in the vicinity of the inlet to detect the introduction of the foodware item into the scanning device. Alternatively, the detector sensor may be positioned in the vicinity of the scanning device. In this case, the detector sensor is preferably positioned such that a wide sensing range is accomplished enabling the detection of a foodware item when it passes through the inlet, is on the conveying system and/or when it passes through the outlet. Alternatively, the detector sensor may be positioned outside the scanning device.

In a preferred embodiment, the CPU further comprises a data transmitting unit. The term "data transmitting unit" as used herein generally refers to a device able to transmit the scanned data received by the CPU to an external server for further processing.

In a further related aspect, the invention also provides for a method for inventorying foodware items. The method optionally has the step of adding a foodware item foreseen with at least one imperceptible identifier marking to an inventory database. The term "inventory database" as used herein generally refers to a database which is able to list all the foodware items which will be used at a certain time at a certain venue. The method further comprises the step of identifying a first user. The term "user" as used herein generally refers to a customer who wants to buy food or a beverage and who will provide for a deposit for the reusable foodware item containing the food or beverage.

Preferably, the method further comprises the step of registering the status of the foodware item as removed from the inventory database. Additionally, the method may comprise the step of registering the status of the foodware item as returned in the inventory database.

The term "removed" as used herein generally refers to the foodware item being in use by a user. The specific foodware item will then not no longer form part of the inventory database, until the moment in time where the user returns the foodware item to a recycling point and the foodware item is again scanned and registered as being returned. The status in the inventory database will be changed from removed to returned.

In a preferred embodiment, the method further comprises the steps of coupling financial information of the user to an account of the user and processing a financial action from the account of the user to the account of e.g. the organiser of the event or the merchant of the foodware items . The term "financial information" as used herein generally refers to any information needed to process a payment from a first party to a second party. The financial information can be the bank account number and the name of the user. The term "user account" or "account of the user" as used herein refers to a file containing information of the user, such as name, email address, home address, bank account number, purchasing information, etc. The term "financial action" refers to the process of authorization and transfer, which includes both the initial pre-authorization - where funds are temporarily held on a payer's account to verify their availability - and the subsequent adjustment and transfer of those funds, where the actual transfer of money occurs once the final transaction amount is confirmed. The term "financial transaction" refers to any transaction made between the bank account of a user and the bank account of an organiser of an event or the merchant of the reusable foodware items.

### EXAMPLES

In order to better show the features of the invention, some preferred embodiments are described below, by way of example without any limiting character, with reference to the appended figures. The embodiments illustrated in the figures are preferred embodiments of the present invention and should not be construed as limiting in any way.

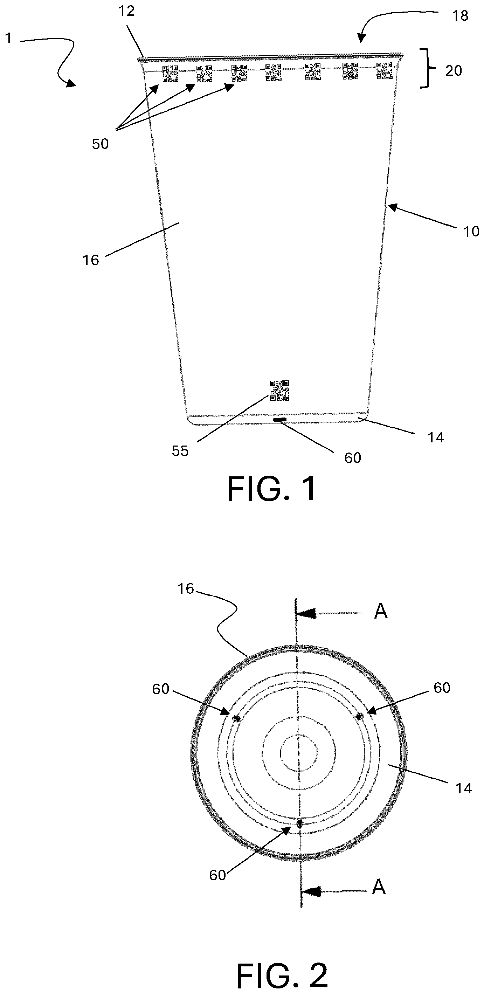

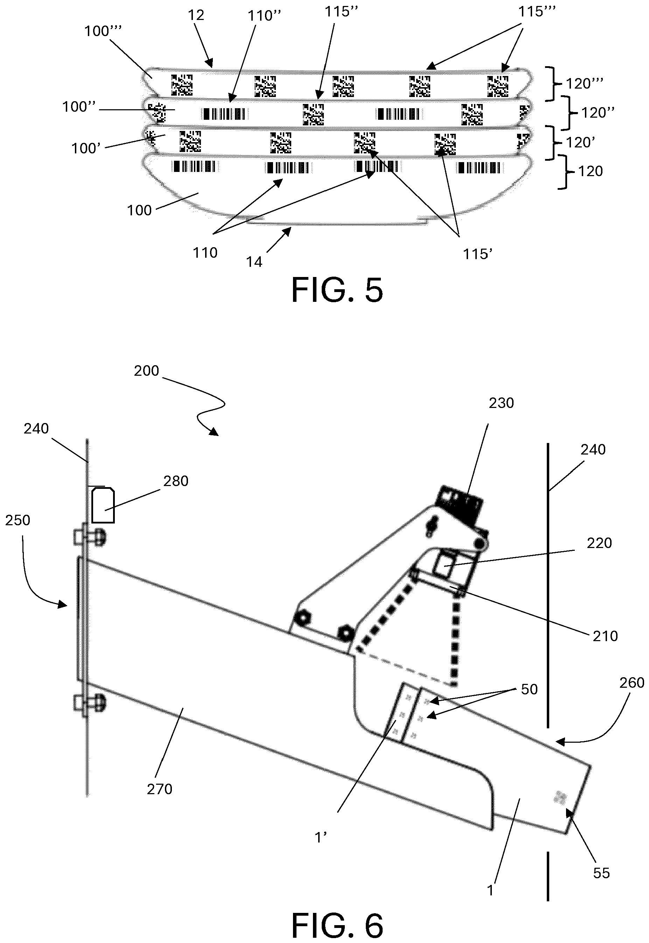

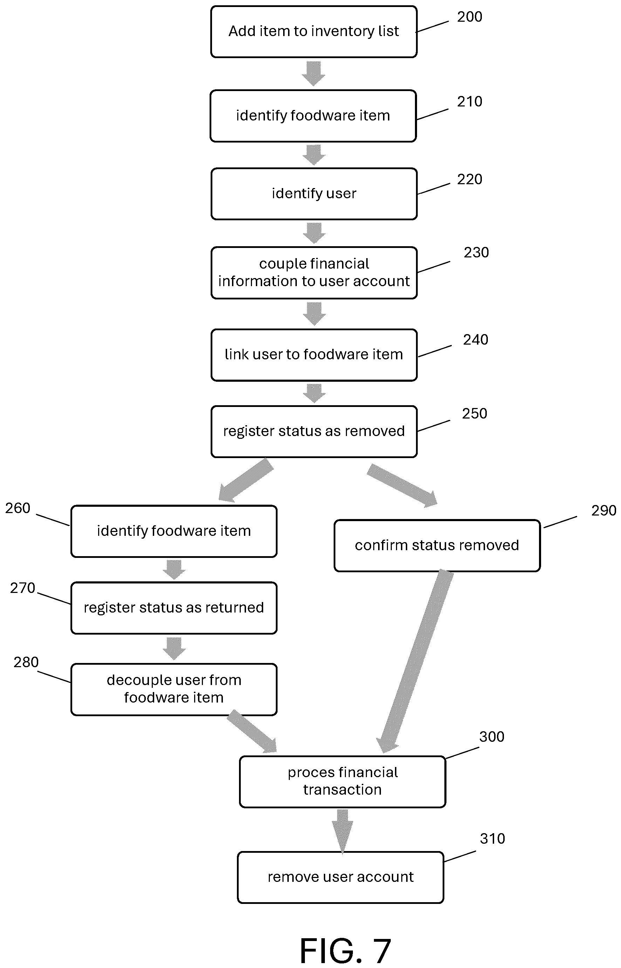

With reference to figure 1 to 5 of the drawings, foodware items according to embodiments of the invention are now described. Figure 6 shows an embodiment of a scanning device of the present invention and figure 7 shows a flowchart of a method according to the invention.

**Figure 1** illustrates a side view of a reusable foodware item 1 provided with a number of optically imperceptible identifier markings 50 on the foodware item 1 according to the invention. The foodware item of figure 1 is a drinking cup 1 comprising a hollow body 10 to receive a beverage in. The hollow body 10 having an open upper rim 12 and a closed base 10 to support the drinking cup 1 when placed on a surface of e.g. a table. The hollow body further has a circumferential sidewall 16 extending between the base 14 and the upper rim 12 thereby defining an open-ended inner cavity 18. A beverage can be inserted into the open-ended inner cavity 18 via the open upper rim 12.

On an upper portion 20 of the circumferential sidewall 16 of the drinking cup 1, a number of optically imperceptible identifier markings 50 are foreseen. The upper portion 20 is positioned in the vicinity of the upper rim 12 and can run along the entire upper rim 12 of the circumferential sidewall 16. Positioning the optically imperceptible identifier markings 50 at this specific location ensures that these identifier markings 50 align with the stacking height, remaining unobstructed even when the drinking cups are nested into each other and form a stack of drinking cups. Preferably, a margin is foreseen between the upper rim 12 and where the optically imperceptible identifier markings 50 are placed. As shown in figure 1, the optically imperceptible identifier markings 50 are QR codes. Although in the example of Figure 1, QR codes 50 are used, any other Universally Unique Identifier or UUID can be used which allow for a unique identification of products when used in the context of Point-of-Sale (POS) scanning. In principle, the drinking cup type is not relevant, as long as the optically imperceptible identifier markings 50 are always placed in the stacking height and between the open upper rims 12 of the two adjacent nested drinking cups 1, 1'.

The plurality of optically imperceptible QR codes 50 is discretely arranged next to each other along the unobstructed upper portion 20 of the circumferential sidewall 16 of the drinking cup 1. All QR codes 50 are identical to each other and are associated with the same unique identifier. Although the QR codes 50 are visibly represented on figure 1, the QR codes 50 are printed onto the surface of the circumferential sidewall 16 using for instance an ultraviolet ink. So, although visibly represented, the QR codes are in fact only visible when the drinking cup 1 is illuminated by an UV lamp. Furthermore, the QR codes may be printed over a design already available on the circumferential sidewall 16. That way, the design can be seen or detected by the human eye under normal lighting conditions, while the QR code will only be visible when illuminated by an UV lamp.

Typically, the unobstructed portion 20 of the sidewall is between 0,2 mm and 100 mm, depending on the optically imperceptible identifier marking 50 which is applied, and which technique is used to apply the identifier marking 50. When a QR code is applied by using an ultraviolet ink, typically the required unobstructed portion 20 of the sidewall is about 20 mm. The identifier markings 50 are thus strategically placed between stacking heights of the drinking cups 1, 1'. Preferably, the minimum space requirements for a QR code are 0,4 mm per module, for a data matrix code is 0,5 mm per cell, and for an Aztec code is 0,3 mm per module. These specifications ensure that the identifier markings 50 are always visible to the scanning sensor 220, regardless of the drinking cup's stacking height or manufacturer.

Further, closer to the base 14 if the drinking cup 1, a second QR code 55 is present. Again, the QR code 55 may be printed onto the surface of the circumferential sidewall 16 using an ultraviolet ink, or a regular visible ink may be used to print the QR code 55 onto the surface of the sidewall 16 of the drinking cup 1. When using a regular visible ink, the bottom QR code 55 will be visible for anyone to see and can be scanned without using a rendering device such as an UV lamp. Such a visible QR code 55 may enhance the POS scanning process when selling a beverage in a reusable drinking cup 1 and may enhance customer integration by stimulating a user to scan the QR code 55, thus leading the user to e.g. return information, app redirection etc. However, when invisible ink such as ultraviolet ink is used, the QR code 55 will only be visible to the human eye and scanning sensor when illuminated by UV light.

Additionally, RFID tags 60 can be embedded in the base 14 of the drinking cup 1. Such an RFID tag 60 may be used supplementary to the optically imperceptible identifier markings 50 and 55. As can be seen in **Figure 2****,** three RFID tags 60 are embedded and located at equal angles from each other in the base 14. Alternatively, the RFID tags 60 can be replaced by another type of UUID, such as a QR code. The bottom QR code may again be printed using visible or invisible ink. Such a bottom QR code may be beneficial when scanning the reusable drinking cup 1 when selling a beverage. When a visible QR code is placed at the bottom of the drinking cup 1, a simple scanning sensor can be used, and no additional rendering device is needed to render an optically imperceptible QR code visible.

Although not necessary, it is preferred that the RFID tags 60 and the QR codes 50, 55, or alternative UUIDs are alle associated with the same unique identifier linked to this particular drinking cup 1.

When it is intended for the drinking cup 1 to be used, the drinking cup can be scanned either by scanning one of the RFID tags 60, a QR code 50 when the optically imperceptible QR code 50 is made visible by use of a UV lamp, or by scanning the visible QR code 55. Using optically imperceptible identifier markings 50 will maintain the drinking cup's aesthetic appeal and functionality, while create an unobtrusive user experience for the end-user. Use of such an optically imperceptible identifier marking 50, optionally in combination with other visible or invisible identifier markings, will however still allow for an efficient and fail-safe scanning at POS areas, at automated or hand-operated return points guaranteeing a smooth refund process.

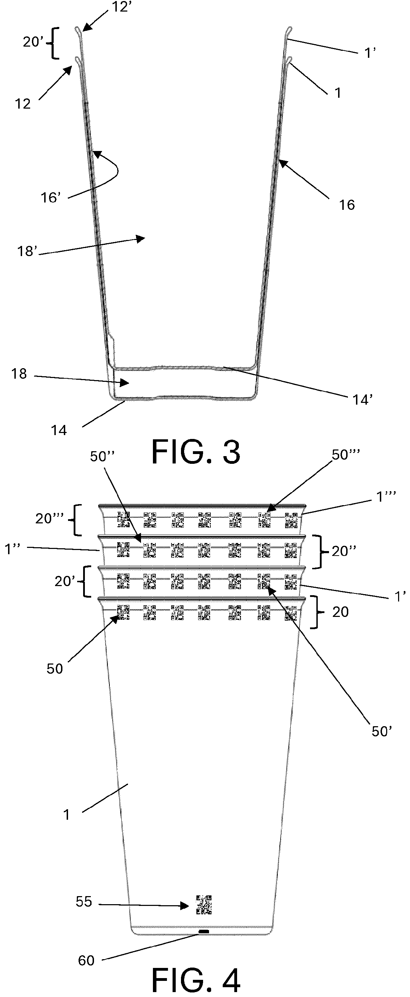

**Figure 3** illustrates a cross-sectional view of the first embodiment of a drinking cup 1 taken along line A-A of figure 2. In figure 3, two identical drinking cups 1, 1' are shown, which are nested within one another. The base 14' and a portion of the circumferential sidewall 16' of the second drinking cup 1' is placed inside the inner cavity 18 of the first drinking cup 1. Due to the slightly tapered shape of the drinking cups 1, 1', the base 14' of the second drinking cup 1' will not be able to reach all the way down up to the base 14 of the first drinking cup 1. However, when the second drinking cup 1e is placed inside the first drinking cup 1 and the second drinking cup 1' is nested inside the first drinking cup 1, an upper portion 20' of the circumferential sidewall 16' of the second drinking cup 1' will not be placed inside the inner cavity 18 of the first drinking cup 1, but will still stick out above the upper open rim 12 of the first drinking cup 1. When the second drinking cup 1' is nested inside the first drinking cup 1, the second QR code 55' is no longer clearly visible for scanning by a scanning sensor, regardless of the fact that the QR code 55' is a visible or optically imperceptible QR code. Also, the RFID tags 60' placed in the base 14' of the second drinking cup 1' may be difficult to reach by a RFID scanner such that detection of one or all of the RFID tags 60' may prove to be impossible. However, the QR codes 50' which are placed in the upper portion 20' of the second drinking cup 1' remain unobstructed and thus scannable by a scanning sensor.

**Figure 4** illustrates a side view of four identical drinking cups 1, 1', 1", 1‴ of figure 1 nested within one another. As can be seen from figure 4, although the four drinking cups are stacked and the majority of the circumferential surface sidewall of each drinking cup is covered by a circumferential surface side wall of another drinking cup, each drinking cup has an unobstructed upper portion 20, 20', 20", 20‴ which contains multiple first QR codes 50, 50', 50", 50'", each set of first QR codes being linked to a unique identifier per set of first QR codes. Only the second QR code 55 of the first drinking cup 1 which remains visible, since this second QR code is not covered by another drinking cup.

In the example as shown in figure 4, each drinking cup 1, 1', 1", 1‴ is provided with optically imperceptible QR codes 50, 50', 50", 50'". However, a combination of different types of identifier markings is possible. Such a combination is shown in **Figure 5.** Figure 5 illustrates an alternative foodware item, in particular food bowls 100, 100', 100", 100‴ nested within one another. The first food bowl 100 is provided with multiple identical optically imperceptible barcodes 110, which are placed along the upper portion 120 of the food bowl 100. The second food bowl 100' is provided with multiple identical optically imperceptible QR codes 115' placed along its upper portion 120'. The third food bowl 100" is provided with a combination of multiple identical optically imperceptible barcodes 110" and multiple identical optically imperceptible QR codes 115" placed along its upper portion 120". Finaly, the fourth food bowl 100‴ is also provided with multiple identical optically imperceptible QR codes 115‴ placed along its upper portion 120'". When the food bowls 100, 100', 100", 100‴ are nested within one another, each optically imperceptible identifier marking of each food bowl remains visible due to the fact that each of these identifier markings are positioned in the upper portion of the food bowls which remain unobstructed by an adjacent stacked food bowl. As can be seen in figure 5, depending on the position of the food bowl, some identifier markings are not completely visible, due to the fact that the food bowl has a circular shape. Such a partial or incomplete identifier marking can be seen on the second food bowl 100' and the third food bowl 100".

Although in the above-described examples, ultraviolet ink was used, similar identifier markings 50 can be created by using an infrared-reflecting ink, a thermochromic ink, a photochromic ink, laser etching or microprinting.

Similar, in the above-described examples, the identifier markings 50 were printed onto the outer surface 16 of the sidewall of the drinking cup 1. However, identifier markings 50 can be provided on a carrier first and subsequently embedded in the sidewall 16 of the drinking cup 1 during manufacturing of the drinking cup 1.

Although not shown, to enhance the scanning quality of the identifier markings 50, it is preferred to slightly distort the identifier markings 50, taking into account the curvature of the surface on which the identifier markings are applied. This pre-distortion compensates for the inherent curvature, thereby preserving the integrity of the identifier markings data pattern when viewed and scanned. The proposed adjustment allows for accurate data retrieval by ensuring the identifier marking remains within standard scannable parameters, despite the surface curvature.

**Figure 6** illustrates a system for scanning a foodware item 1, 100 as shown in figures 1 to 5. The system as shown in figure 6 comprises a scanning device 200 having a rendering device 210 and a scanning sensor 220. The rendering device 210 is a UV illumination device employing UV light to make the otherwise invisible QR codes 50 readable to the scanning sensor 220. The scanning sensor 220 of the embodiment of figure 6 is a camera which rapidly captures a series of images of the moving drinking cups. Preferably, the camera 220 can scan and capture QR codes 50 even when they are not positioned directly facing it but are positioned sideways relative to the camera 220. This enables the camera 220 to read QR codes 50 that are only partially visible or appear distorted due to the angle at which they are positioned relative to the camera 220.

Since the QR codes 50 are located in the unobstructed upper portion 20 of each drinking cup 1, the QR codes 50, after made visible by the UV illumination device 210, will be captured and present on the series of images produced by the camera. The scanning device 200 further has a central processing unit or CPU 230 which is operatively coupled to the UV illumination device 210 and camera 220. Once scanning is complete and the camera 220 has captured the series of images, the CPU 230 is able to receive these images and will be able to transmit these images via a data transmitting unit to a remote server for further processing.

The scanning device 200 is further equipped with an inlet 250 through which the drinking cups 1, 1' can be introduced into the scanning device 200, and an outlet 260 through which the drinking cups 1, 1' are able to exit the scanning device 200 after being scanned by the camera 220. Both the inlet 250 and outlet 260 are foreseen in a casing 240 of the scanning device 200. As can be seen from figure 6, the UV illumination device 210 and camera 220 are positioned between the inlet 250 and the outlet 260 of the scanning device 200 such that the QR codes 50 on the drinking cups 1, 1' can be scanned when the drinking cups 1, 1' are moved from the inlet 250 to the outlet 260. The system is further provided with a conveying system 270. The conveying system 270 is formed by a U-shaped tube dimensioned to allow the easy insertion and motion of the drinking cups 1, 1' from the inlet 250 to the outlet 260. The U-shaped tube 270 is placed such that the inlet opening of the tube 270 is positioned higher than the outlet opening of the tube 270, and thus the inlet 250 of the scanning device 200 needs to be positioned above the outlet 260 of the scanning device 200. That way, each drinking cup 1 is able to slide along the U-shaped tube 270 from the inlet 250 to the outlet 260 by means of gravity alone. Hence, the U-shaped tube is a passive conveying system 270, meaning that no other mechanical mechanisms are needed to move the drinking cup 1 from the inlet 250 to the outlet 260.

The side walls of the U-shaped tube 270 are provided with cut-outs near its outlet opening. By providing such cut-outs, the camera 220 will be able to detect more easily a QR code which is positioned more to the side. Also, when multiple camera's 220 are installed inside the scanning device 200, such a cut-out will enlarge the scanning area for each of the camera's 220.

Alternatively, an active conveying system 270 may be provided, such as a transport belt to move the drinking cups 1 from the inlet 250 to the outlet 260. The advantage of such an active conveying system 270 is that it is possible to adapt the speed of movement of the drinking cup 1 when moving from the inlet 250 to the outlet 260. Also, when the camera 220 was not able to detect and scan the QR codes 50 on a particular drinking cup 1, the transport belt of the active conveying system 270 may be reversed such that the drinking cup 1 is again placed inside the scanning range of the camera 220.

Further, the scanning device 200 is foreseen with a detector sensor 280 positioned in the vicinity of the inlet 250 of the scanning device 200. The detector sensor 280 is able to detect when a drinking cup 1 is being inserted through the inlet 250 into the scanning device 200. The detector sensor 280 is operatively coupled to the CPU 230 such that a detection signal can be given to the CPU 230. The CPU 230 at its turn is able to control the operation of the UV illumination device 210 and the camera 220 such that both the UV illumination device 210 and camera 220 only need to be activated when the insertion of a drinking cup 1 is detected. The CPU 230 is thus able to initiate, adjust and/or terminate the activation of the UV illumination device 210 and the camera 220.

Although not shown, additionally, a second detector sensor may be present inside the casing 240 of the scanning device 200. Such an additional detector sensor may be positioned in the vicinity of the outlet 260 of the scanning device 200 such that the additional detector sensor may detect when the drinking cup 1 exits the scanning device via the outlet 260. Alternatively, or in addition to the second detector sensor, a third detector sensor may be positioned in the vicinity of the camera 220 such that the third detector sensor may be able to detect the movement of the drinking cup 1 when passing along the camera 220. As long as the third detector sensor detects movement, a signal is generated and send to the CPU 230, and the camera 220 continues to scan until no longer a movement is detected by the third detector device.

So, when the scanning device 200 forms part of a returning procedure, the scanning device 200 can be operated as follows:
- The detector sensor 280 at the inlet 250 of the scanning device 200 detects when a drinking cup 1 is deposited. A detection signal is sent by the detector sensor 280 to the CPU 230, which will at its turn initiate the activation of both the UV illumination device 210 and the camera 220. When the detector sensor 280 is not only directed to the inlet 250 but is also able to detect movement along the U-shaped tube 270, the detector sensor 280 will be able to detect a continued movement. In such a case, the scanning of the QR codes 50 by the camera 220 may continue until the detector sensor 280 no longer detects movement inside the U-shaped tube 270, indicating that all drinking cups 1, 1' have been processed.
- Upon detection of a drinking cup 1 being entered through the inlet 250, the UV illumination device 210 will be activated and the device 210 will employ UV light to make the otherwise invisible QR codes 50 readable to the camera 220.
- Simultaneous with the activation of the UV illumination device 210, the camera 220 will be activated such that the camera 220 is able to rapidly capture a series of images of the drinking cups passing by the camera 220. The QR codes 50 are places such that the QR codes 50, which are printed between the stacking heights of the drinking cups 1, 1', are always detectable by the camera 220, regardless of the orientation of the drinking cups 1, 1'.
- Once the scanning is complete, or alternatively during the scanning of the QR codes 50 by the camera 220, the scanned images are sent to the CPU 230, where the CPU 230 transmits the data of the scanned drinking cups 1, 1' to an external server for further processing. Alternatively, the transmission of the data can be done by the camera 220 when a transmitting unit is present in the camera 220.

Such a returning process allows for an efficient, accurate, automated, and non-intrusive scanning of returned drinking cups 1, 1', thus facilitating seamless deposit refunds and inventory management. There is no manual handling involved during the actual scanning process, which results in a reduction of personnel to operate the scanning device, prevents long waiting lines for the end-users when returning their drinking cups and ensures a smooth and hassle-free experience for all parties involved.

Although the scanning device 200 as shown in figure 6 is designed as a stationary return point for the drinking cups 1, 1', a simplified scanning device 200 is likewise possible. Such a simplified scanning device 200 would comprise of a rendering device 210, a scanning sensor 220 and a CPU 230. For instance, a handheld scanner incorporating a UV light 210, a camera 220 and a CPU 230 would be able to scan the optically imperceptible QR code 50 which is placed on the outer surface of the drinking cup 1. Therefore, an operator of the handheld scanner will need to point the camera 220 to the location of the optically imperceptible QR code 50, activate the handheld scanner by pressing a button, and upon activation, the UV light 210 will emit a UV light, such that the camera 220 is now able to detect and scan the rendered visible QR code 50. Such a handheld scanner thus not require an inlet 250 or an outlet 260. When drinking cups 1, 1' are nested into each other, the handheld scanner will still be able to scan multiple drinking cups 1, 1' at the same time, when the handheld scanner is held at a sufficient distance from the drinking cups 1, 1'. Such a handheld scanner is extremely useful when the drinking cups 1, 1' are being used at a POS location, and each drinking cup needs to be scanned and registered to a specific user before being handed to this specific user.

**Figure 7** illustrates a flowchart showing a method for inventorying foodware items according to the invention.

At step 200, an item is added to the inventory database by scanning at least one of the optically imperceptible identifier marking 50 placed on or into the sidewall of the foodware item 1, 100. Although step 200 needs to occur at one point in time, adding the foodware item to the inventory database is only mandatory when a new inventory database is created, or when the specific foodware item needs to be added to an existing inventory database.

At step 210, the foodware item 1, 100 which will be handed to the user is identified by scanning either the optically imperceptible identifier markings 50, 110, 115, the identifier marking 55 or the RFID tag 60.

At step 220, a user needs to be identified. The identification of a user can be done by scanning the bankcard of the user. By reading the EMV chip embedded in the bankcard of the user, typically, the EMV chip will generate a unique transaction code for each use, thus allowing the EMV chip, and hence the user, to be linked to a specific transaction. The unique transaction code is then saved in a user information database.

At step 230, the unique transaction code of the user is then coupled to an individual user account. When a user purchases multiple beverages in a reusable drinking cup, each purchase will generate a unique transaction code of the user. Each unique transaction code will then be coupled to the same individual user account.

At step 240, the user is linked to the foodware item which was scanned at step 230. The unique transaction code which was generated when swiping the bankcard of the user will be linked to the unique identifier which is linked to the e.g. scanned optically imperceptible identifier marking 50.

Once linked, at step 250, the foodware item 1, 100 which was scanned and given to the user, will receive the status "removed" in the inventory database.

Once the foodware item 1, 100 received the status removed from the inventory database, two scenarios may happen: in the first scenario, the foodware item 1, 100 is returned during or at the end of the event, or in a second scenario, the foodware item 1, 100 is not returned during or at the end of the event.

In the first scenario, the foodware item 1, 100 is returned at step 260. The returning of the foodware item 1, 100 is done by scanning at least one of the optically imperceptible identifier markings 50 which are placed on the outer surface of the foodware item 1, 100. Such scanning can be done using the scanning device 200 as shown in figure 6 or can be done by manually scanning the optically imperceptible identifier marking 50 using a handheld scanner.

At step 270 and after the foodware item 1, 100 is identified, the status in the inventory database is changed from "removed" to "returned".

At step 280, the user which originally was handed the foodware item 1, 100, is then decoupled from the identified foodware item 1, 100. Therefore, the unique transaction code which was generated when originally swiping the bankcard of the user will be decoupled from the unique identifier which is linked to the scanned optically imperceptible identifier marking 50.

At step 300, the financial action will be processed. In the case when the reusable foodware item 1, 100 was returned, the financial action will be limited to the purchase of the food which was contained in the foodware item 1, 100. For instance, if the foodware item was a drinking cup 1 and a beverage was purchased, only the beverage will be charged during the financial action.

In the second scenario, the foodware item 1, 100 is not returned, and at step 290, the status "removed" is confirmed. Such confirmation of the status "removed" can be done automatically when the event is finished, and e.g. the organizer of the event registers the event as finished. At that point in time, all foodware items which have not been returned and thus still have the status "removed" will be registered as "removed".

Again, at step 300, the financial action will be processed. In the case when the reusable foodware item 1, 100 was not returned, the financial action will not only be limited to the purchase of the food which was contained in the foodware item 1, 100, but the deposit for the foodware item 1, 100 itself will also be included in the financial action. For instance, if the foodware item was a drinking cup 1 and a beverage was purchased, both the beverage and the deposit of the foodware item 1, 100 will be charged during the financial action.

Finally, at step 310, the user account and the coupled information such as each unique transaction code and the individual user account information will be removed from the user information database.

Optionally, the foodware items 1, 100 which were not returned, will be removed from the inventory database, while the remaining foodware items which were returned can be reused again at the next event with the same inventory database. Additionally, new foodware items can be added to the existing inventory database such that these new foodware items can now be added to the remaining and returned foodware items for use at the next event.

A further advantage of the foodware items having at least one optically imperceptible identifier, the scanning device and/or the method for inventorying the foodware items according to the present invention is that when end-users are gathering the reusable foodware items 1, 100, and only one end-user returns a number of reusable foodware items 1, 100, each original end-user will receive a payback from the returned foodware item or the deposit will be deducted from the account of the original end-user, regardless if the foodware item was returned by another user.

## Claims

1. A reusable foodware item (1, 100) comprising
a substantially hollow body (10), the substantially hollow body (10) having:
- an open upper rim (12),
- a closed base (14) for supporting the foodware item (1) on a surface, and
- at least one sidewall (16) extending between the base (14) and the upper rim (12) defining an open-ended inner cavity (18) for receiving of the substance,
wherein the at least one sidewall (16) is configured to enable nesting of a plurality of similarly shaped reusable foodware items (1, 100) such that the closed base (14) and a portion of the at least one sidewall (16) fit into the inner cavity (18) of another reusable foodware item (1', 100') while leaving an upper portion (20, 120) of the sidewall (16), adjacent to and below the open upper rim (12), unobstructed, thereby defining an unobstructed upper portion (20, 120); and
wherein the at least one sidewall (16) is provided with at least one optically imperceptible identifier marking (50, 110, 115) associated with a unique identifier, the at least one optically imperceptible identifier marking (50, 110, 115) being integrated onto or into an exterior surface of the at least one sidewall (16) of the foodware item (1) at the unobstructed upper portion (20, 120) of the at least one sidewall (16).

2. The foodware item (1, 100) according to claim 1, wherein a plurality of optically imperceptible identifier markings (50, 110, 115) are discretely arranged next to each other along the unobstructed upper portion (20, 120) of the at least one sidewall (16) of the foodware item (1, 100), each one of the plurality of optically imperceptible identifier markings (50, 110, 115) being associated with the same unique identifier.

3. The foodware item (1, 100) according to any of the previous claims, wherein the at least one optically imperceptible identifier marking (50, 110, 115) comprises a 1D code, a 2D code, a watermark, or a Digimarc, and wherein the at least one optically imperceptible identifier marking (50, 110, 115) is applied using an ultraviolet ink, an infrared-reflecting ink, a thermochromic ink, a photochromic ink, laser etching, and/or microprinting.

4. The foodware item (1, 100) according to claim 3, wherein the at least one optically imperceptible identifier marking (50, 110, 115) is printed onto the outer surface of the sidewall (16) of the foodware item (1, 100) at or along the unobstructed upper portion (20, 120), or wherein the at least one optically imperceptible identifier marking (50) is embedded into the sidewall (16) of the foodware item (1).

5. The foodware item (1, 100) according to any of the previous claims, wherein the foodware item (1) further comprising a visible identifier marking (55) and/or a RFID tag (60) provided on or within the foodware item (1, 100) and associated with the same unique identifier.

6. The foodware item (1, 100) according to any of the previous claims, wherein the foodware item (1, 100) is a drinking cup (1, 1'), a food bowl for salads or soups, durable plates for main courses, burger boxes or other food containers.

7. A system for identifying one or more foodware items (1, 100) according to any of the previous claims, the system comprising a scanning device (200) having:
- a rendering device (210), the rendering device (210) being configured to render the at least one optically imperceptible identifier marking (50) on the foodware items (1,100) visible,
- one or more scanning sensors (220), the one or more scanning sensor (220) being configured to capture data associated with the at least one rendered visible identifier marking (50), and
- a central processing unit or CPU (230) operatively coupled to the rendering device (210) and the one or more scanning sensor (220); the CPU (230) being configured:
∘ to control the operation of the rendering device (210) and/or the one or more scanning sensor (220) by sending instructions to initiate, adjust and/or terminate the rendering by the rendering device (210) and/or the scanning process by the one or more scanning sensor (220), and
∘ to receive the captured data from the one or more scanning sensor (220).

8. The system according to claim 7, wherein the scanning device (200) further comprising:
- an inlet (250) configured for the introduction of the foodware item (1, 100) into the scanning device (200) for scanning,
- an outlet (260) configured for removal of the foodware item (1, 100) from the scanning device (200) after scanning,
wherein the rendering device (210) and the one or more scanning sensor (220) are positioned between the inlet (250) and the outlet (260) of the scanning device (200).

9. The system according to claim 8, wherein the one or more scanning sensor (220) is configured to scan a plurality of foodware items (1, 1') nested within one another, and/or the one or more scanning sensor (220) being arranged to scan the at least one rendered visible identifier markings (50) sideways.

10. The system according to claim 8 or 9, wherein the system further comprises a conveying system (270) positioned between the inlet (250) and outlet (260) of the scanning device (200), the conveying system (270) being configured to transport a foodware item (1, 1') from the inlet (250) to the outlet (260) of the scanning device (200).

11. The system according to any of the claims 7 to 10, wherein the system further comprises a detector sensor (280) for detecting the presence of a foodware item (1, 1'), the detector sensor (280) being configured to detect the introduction of a foodware item (1, 1') in the scanning device (200).

12. A system according to any of the claims 7 to 11, wherein the CPU (230) further comprises a data transmitting unit, the data transmitting unit being connected to the CPU (230) for receiving the scanned data from the CPU (230) and transmitting the received scanned data to a remote server for further processing.

13. A system according to any of the claims 7 to 12, wherein the rendering device is a UV illumination device (210) configured to employ UV light to render the at least one optically imperceptible identifier marking (50) visible for the scanning sensor (220).

14. Method for inventorying a plurality of foodware items (1, 100), each foodware item according to any of the claims 1 to 6, wherein the method comprises the steps of:
- providing one or more foodware item (1, 100); wherein each foodware item (1, 100) is linked to a unique identifier in an inventory database, wherein each foodware item is provided with at least one optically imperceptible identifier marking (50, 110, 115) associated with the same unique identifier,
- identifying a first foodware item (1,100) by scanning at least one optically imperceptible identifier marking (50, 110, 115), a visible identifier marking (55) and/or a RFID tag (60) provided on or within the foodware item (1, 100) and associated with the same unique identifier,
- identifying a first user, optionally coupling financial information of the first user to an account of the first user in the inventory database,
- linking the first user to the first foodware item (1, 100) in the inventory database,
- registering the status of the first foodware item (1, 100) as removed in the inventory database, and
- optionally processing a first financial action associated with the removed status based on the financial information of the first user in the first user account.

15. Method for inventorying foodware items (1, 100) according to claim 14, wherein the method further comprises the steps of
- identifying the first foodware item (1, 100) by scanning the at least one optically imperceptible identifier marking (50, 110, 115) on the foodware item (1, 100),
- registering the status of the first foodware item (1, 100) as returned in the inventory database,
- decoupling the first user from the first foodware item (1, 100) in the inventory database if the status of the first foodware item (1, 100) is registered as returned in the inventory database; and,
- optionally, processing a second financial action associated with the returned status based on the financial information of the first user in the first user account.
